# EUROPEAN PATENT APPLICATION

(11) **EP 4 730 828 A1**
(43) Date of publication of application: **22.04.2026**
(21) Application number: 24832511.0
(22) Date of filing: 28.06.2024
(51) Int. Cl.: H04N 23/57, H04N 23/54, H04N 23/55, H04N 23/51, G03B 30/00, G03B 17/12, H04N 23/68

(54) **OPTICAL ASSEMBLY AND ELECTRONIC DEVICE COMPRISING SAME**

(30) Priority: 29.06.2023 KR 20230083988; 08.11.2023 KR 20230153870
(71) Applicant: Samsung Electronics Co., Ltd., Suwon-si, Gyeonggi-do 16677 (KR)
(72) Inventor: LEE, Kihuk, Suwon-si Gyeonggi-do 16677 (KR); SEO, Bosung, Suwon-si Gyeonggi-do 16674 (KR)
(74) Representative: HGF
(86) International application number: PCT/KR2024/009124
(87) International publication number: WO 2025/005735

(57) **Abstract**

According to an embodiment of the present disclosure, an electronic device may be provided. The electronic device may comprise: a case; a lens group disposed on a portion of the case and comprising at least one lens aligned along an optical axis; an image sensor disposed in the case and configured to detect light which has passed through the lens group; and an optical member disposed between the lens group and the image sensor in the case and configured to change the path of light which has passed through the lens group toward the image sensor. The optical member may include a first sidewall inclined with respect to the optical axis of the lens group and a second sidewall disposed opposite to the first sidewall of the optical member. The electronic device may comprise a first support member configured to contact a portion of the case and to support the first sidewall, and a second support member configured to contact a portion of the case and to support the second sidewall.

## Description

### [Technical Field]

Embodiments of the disclosure relate to an optical assembly and an electronic device including the same.

### [Background Art]

Along with the advancement of information and communication technology and semiconductor technology, various functions may now be integrated into a single portable electronic device. For example, communication functions, entertainment functions like gaming, multimedia functions such as music/video playback, communication and security functions for mobile banking, and schedule management and electronic wallet functionalities are all integrated into one electronic device. These electronic devices are miniaturized so that users may conveniently carry them.

The above information is presented as related art only to assist with an understanding of the disclosure. No determination has been made, and no assertion is made, as to whether any of the above might be applicable as prior art with regard to the disclosure.

### [Detailed Description of the Invention]

### [Technical Solution]

According to an embodiment of the disclosure, an electronic device may be provided. The electronic device may include a case, a lens group disposed in a portion of the case and including at least one lens aligned along an optical axis, an image sensor disposed inside the case and configured to detect light passing through the lens group, and an optical member disposed between the lens group and the image sensor inside the case and configured to change a path of the light passing through the lens group toward the image sensor. The optical member may include a first sidewall inclined with respect to the optical axis and a second sidewall disposed opposite to the first sidewall of the optical member. The electronic device may include a first support member configured to contact a portion of the case and support the first sidewall, and a second support member configured to contact a portion of the case and support the second sidewall.

According to an embodiment of the disclosure, an optical assembly may be provided. The optical assembly may include a case, a lens group disposed in a portion of the case and including at least one lens aligned along an optical axis, an image sensor disposed inside the case and configured to detect light passing through the lens group, a reflective member disposed between the lens group and the image sensor inside the case and configured to change a path of the light passing through the lens group toward the image sensor, and a first support member and a second support member disposed on both opposite sides of the optical member. The case may include a first assembly reference portion surrounding at least a portion of the first support member and a second assembly reference portion surrounding at least a portion of the second support member.

### [Brief Description of Drawings]

The above or other aspects, configurations, and/or advantages of an embodiment of the disclosure may become more apparent from the following detailed description with reference to the accompanying drawings.
FIG. 1 is a block diagram illustrating an electronic device in a network environment according to an embodiment of the disclosure.
FIG. 2 is a front perspective view illustrating an electronic device according to an embodiment of the disclosure.
FIG. 3 is a rear perspective view illustrating an electronic device according to an embodiment of the disclosure.
FIG. 4 is a rear view illustrating a portion of the rear surface of an electronic device according to an embodiment of the disclosure.
FIG. 5 is a side cross-sectional view illustrating an optical assembly according to an embodiment of the disclosure, taken along a line A-A' in FIG. 4.
FIG. 6 is a side cross-sectional view illustrating the optical assembly according to an embodiment of the disclosure, taken along the line A-A' in FIG. 4.
FIG. 7 is a perspective view illustrating an optical member and support members in an optical assembly according to an embodiment of the disclosure.
FIG. 8A is a perspective view illustrating a first case, an optical member, and support members in an optical assembly according to an embodiment of the disclosure.
FIG. 8B is a side cross-sectional view taken along a line B-B' in FIG. 8A, according to an embodiment of the disclosure.
FIG. 8C is a side cross-sectional view taken along a line C-C' in FIG. 8A, according to an embodiment of the disclosure.
FIG. 9A is a perspective view illustrating an optical assembly according to an embodiment of the disclosure.
FIG. 9B is a plan view illustrating an optical assembly according to an embodiment of the disclosure.
FIG. 9C is a side cross-sectional view illustrating an optical assembly according to an embodiment of the disclosure.
FIGS. 10A, 10B, and 10C are diagrams illustrating an assembly structure of an optical assembly according to an embodiment.
FIGS. 11A, 11B, and 11C are diagrams illustrating an assembly structure of an optical assembly according to an embodiment.
FIG. 12A is a schematic layout view illustrating some components of an optical assembly according to an embodiment.
FIG. 12B is a schematic layout view illustrating some components of an optical assembly according to an embodiment.
FIG. 13A is a schematic layout view illustrating some components of an optical assembly according to an embodiment.
FIG. 13B is a schematic layout view illustrating some components of an optical assembly according to an embodiment.

Throughout the attached drawings, similar reference numerals may be assigned to similar parts, components, and/or structures.

### [Mode for Carrying out the Invention]

With reference to the accompanying drawings, the following description is provided to aid a comprehensive understanding of various embodiments of the disclosure as defined by the claims and their equivalents. Although the following description includes various specific details for the purpose of aiding understanding, they should be regarded merely as examples. Accordingly, those skilled in the art will understand that various changes and modifications may be made to various embodiments described herein without departing from the scope and spirit of the disclosure. Further, a description of well-known functions and constructions may be omitted for the sake of clarity and conciseness.

The terms and words used in the following description and claims are not limited to their literary meanings, but are used by the inventor only to enable a clear and consistent understanding of the disclosure. Therefore, it will be apparent to those skilled in the art that the following description of various embodiments of the disclosure is provided for purposes of illustration only and not for the purpose of limiting the disclosure as defined by the appended claims and their equivalents.

The singular forms "a," "an," and "the" are intended to include plural referents unless the context clearly dictates otherwise. Thus, for example, reference to "a component surface" includes reference to one or more of such surfaces.

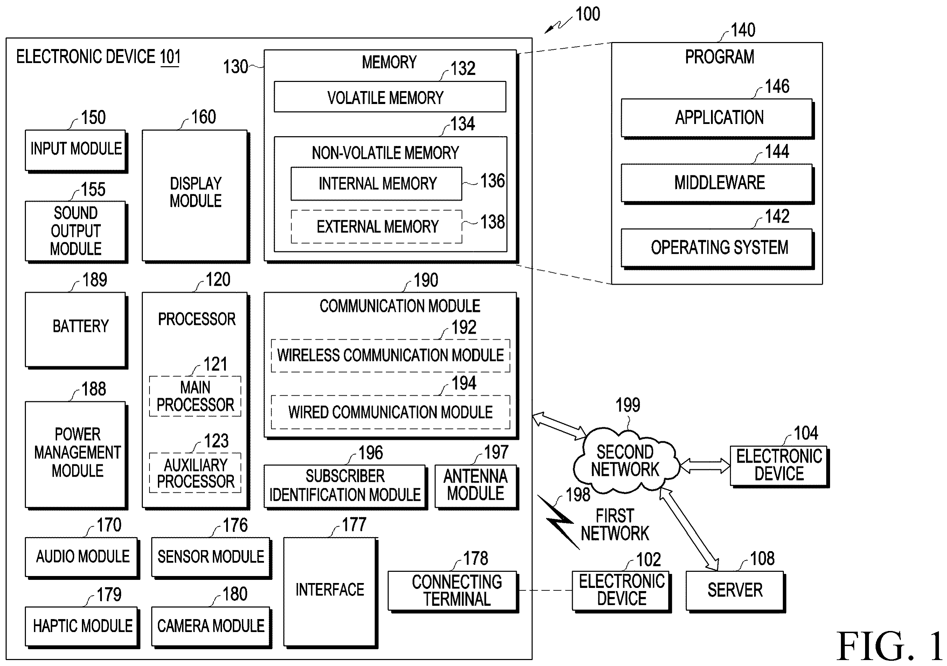

FIG. 1 is a block diagram illustrating an electronic device 101 in a network environment 100 according to an embodiment of the disclosure.

Referring to FIG. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one of the components (e.g., the connecting terminal 178) may be omitted from the electronic device 101, or one or more other components may be added in the electronic device 101. In an embodiment, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the strength of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to an embodiment, the antenna module 197 may form an mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

In the following detailed description, a longitudinal direction, width direction, and/or thickness direction of an electronic device may be mentioned. The longitudinal direction may be defined as a 'Y-axis direction', the width direction as an 'X-axis direction', and/or the thickness direction as a 'Z-axis direction'. In an embodiment, regarding directions in which components are oriented, 'negative/positive (-/+)' may be mentioned together with the Cartesian coordinate system illustrated in the drawings. For example, the front surface of an electronic device or a housing may be defined as a 'surface facing a +Z direction', and the rear surface thereof may be defined as a 'surface facing a -Z direction'. In an embodiment, a side surface of the electronic device or the housing may include an area facing a +X direction, an area facing a +Y direction, an area facing a -X direction, and/or an area facing a -Y direction. In an embodiment, the 'X-axis direction' may mean both the '-X direction' and the '+X direction'. It should be noted that this is based on the Cartesian coordinate system illustrated in the drawings, for brevity of description, and that the description of these directions or components does not limit an embodiment of the disclosure. For example, the afore-mentioned direction that the front or rear surface faces may change depending on whether the electronic device is in a folded state or an unfolded state, and the afore-mentioned directions may be interpreted differently depending on a user's gripping habit.

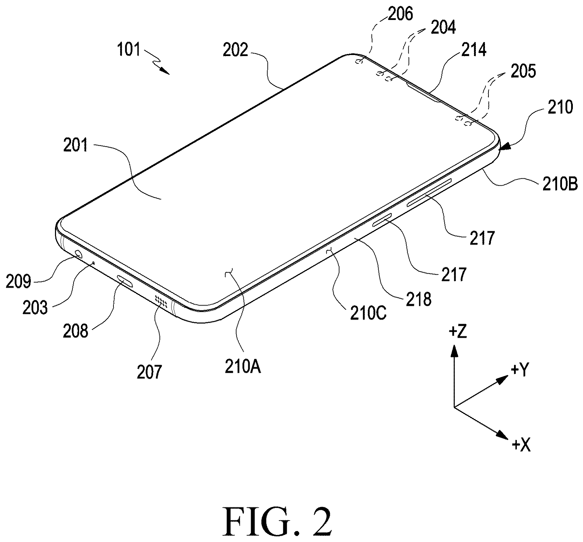

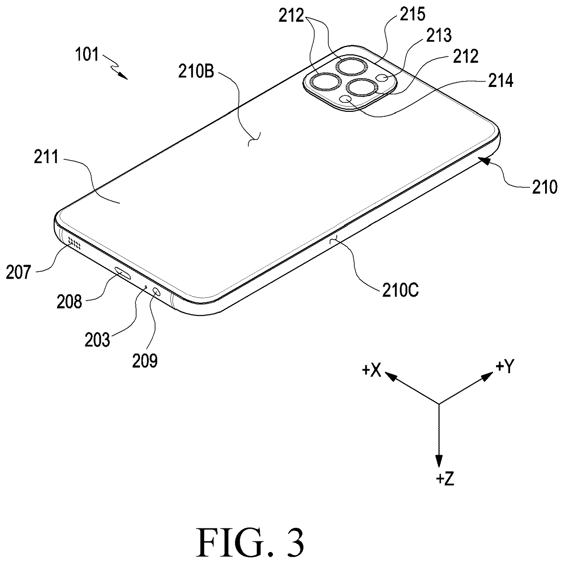

FIG. 2 is a front perspective view illustrating an electronic device according to an embodiment of the disclosure. FIG. 3 is a rear perspective view illustrating the electronic device illustrated in FIG. 2 according to an embodiment of the disclosure. The configuration of the electronic device 101 illustrated in FIGS. 2 and 3 may be entirely or partially identical to that of the electronic device 101 illustrated in FIG. 1.

Referring to FIGS. 2 and 3, the electronic device 101 according to an embodiment may include a housing 210 which includes a first surface (or front surface) 210A, a second surface (or rear surface) 210B, and side surfaces 210C surrounding a space between the first surface 210A and the second surface 210B. In an embodiment (not shown), the housing 210 may refer to a structure that forms a portion of the first surface 210A, the second surface 210B, and the side surfaces 210C of FIG. 2. According to an embodiment, at least a portion of the first surface 210A may be formed by a front plate 202 (e.g., a glass plate or polymer plate including various coating layers) which is at least partially substantially transparent. The second surface 210B may be formed by a rear plate 211 which is substantially opaque. The rear plate 211 may be formed of, for example, coated or tinted glass, ceramic, a polymer, a metal (e.g., aluminum, stainless steel (STS), or magnesium), or a combination of at least two of these materials. The side surfaces 210C may be coupled to the front plate 202 and the rear plate 211 and formed by a side structure (or "side bezel structure") 218 including a metal and/or a polymer. In an embodiment, the rear plate 211 and the side structure 218 may be integrally formed and include the same material (e.g., a metal material such as aluminum).

While not shown, the front plate 202 may include area(s) which are bent and extend seamlessly from at least a portion of an edge toward the rear plate 211. In an embodiment, the front plate 202 (or the rear plate 211) may include only one of the areas bent and extended toward the rear plate 211 (or the front plate 202) at one edge of the first surface 210A. According to an embodiment, the front plate 202 or the rear plate 211 may have a substantially flat shape, and in this case, may not include any bent and extended area. When a bent and extended area is included, the electronic device 101 may have a smaller thickness in a portion including the bent and extended area than in the other portions.

According to an embodiment, the electronic device 101 may include at least one of a display 201, an audio module (not shown) (e.g., the audio module 170 of FIG. 1) including at least one sound hole 203, 207, and 214, a sensor module 204 (e.g., the sensor module 176 of FIG. 1), camera modules 205, 212, 213, and 214 (e.g., the camera module 180 of FIG. 1), key input devices 217 (e.g., the input module 150 of FIG. 1), or connector holes 208 and 209 (e.g., the connecting terminal 178 of FIG. 1). In an embodiment, the electronic device 101 may not be provided with at least one (e.g., a key input device 217 or a light emitting element 206) of the components or may additionally include other components.

According to an embodiment, the display 201 may be exposed, for example, through a substantial portion of the front plate 202. In an embodiment, at least a portion of the display 201 may be exposed through the front plate 202 forming the first surface 210A or a portion of a side surface 210C. In an embodiment, a corner of the display 201 may be formed substantially in the same shape as that of an adjacent periphery of the front plate 202. In an embodiment (not shown), a gap between the periphery of the display 201 and the periphery of the front plate 202 may be substantially equal to increase the visually exposed area of the display 201.

In an embodiment (not shown), a recess or an opening may be formed in a portion of a screen display area of the display 201, and at least one of the sound hole 214, the sensor module 204, the camera module 205, or the light emitting element 206, which is aligned with the recess or the opening, may be included. In an embodiment (not shown), at least one of the sound hole 214, the sensor module 204, the camera modules 205, a fingerprint sensor (not shown), or the light emitting element 206 may be included on the rear surface of the screen display area of the display 201. In an embodiment (not shown), the display 201 may be incorporated with or disposed adjacent to a touch sensing circuit, a pressure sensor capable of measuring the intensity (pressure) of a touch, and/or a digitizer that detects a magnetic field-based stylus pen. In an embodiment, at least a portion of the sensor module 204 and/or at least some of the key input devices 217 may be disposed on a side surface 210C.

According to an embodiment, an audio module (not shown) may include a microphone hole 203, and sound holes 207 and 214. A microphone for obtaining an external sound may be disposed in the microphone hole 203, and in an embodiment, a plurality of microphones may be disposed to detect the direction of a sound. The sound holes 207 and 214 may include an external sound hole 207 and a receiver hole 214 for calls. In an embodiment, the sound holes 207 and 214 and the microphone hole 203 may be implemented as a single hole, or a speaker (e.g., a piezo speaker) may be included without the sound holes 207 and 214.

According to an embodiment, the sensor module 204 may generate an electrical signal or data value corresponding to an internal operating state or an external environmental state of the electronic device 101. The sensor module 204 may include, for example, a first sensor module 204 (e.g., a proximity sensor) and/or a second sensor module (not shown) (e.g., a fingerprint sensor), disposed on the first surface 210A of the housing 210. According to an embodiment, an additional sensor module may be disposed on the second surface 210B of the housing 210. The fingerprint sensor (not shown) may be disposed on the second surface 210B or a side surface 210C as well as on the first surface 210A (e.g., the display 201) of the housing 210. The electronic device 101 may further include, for example, at least one of a gesture sensor, a gyro sensor, a barometric pressure sensor, a magnetic sensor, an acceleration sensor, a grip sensor, a color sensor, an IR sensor, a biometric sensor, a temperature sensor, a humidity sensor, or an illuminance sensor.

According to an embodiment, the camera modules 205, 212, 213, and 214 may include a first camera module 205 facing the first surface 210A of the electronic device 200, and a second camera module 212, a flash 213, and a sensor module 214 (e.g., a distance sensor) facing the second surface 210B. According to an embodiment, the electronic device 101 may further include a cover window 215 covering the camera modules 205, 212, 213, and 214. For example, the first camera module 205 and/or the second camera module 212 may include one or more lenses, an image sensor, and/or an ISP. According to an embodiment, some camera module 205 out of the camera modules 205 and 212 and/or some sensor module (e.g., the sensor module 204) may be disposed to be exposed to the outside through at least a portion of the display 201. According to an embodiment, the first camera module 205 may include a punch hole camera disposed inside a hole or recess formed on the rear surface of the display 201. For example, the first camera module 205 may receive at least a portion of light incident toward the first surface 210A (or the front surface) of the electronic device 101 through the display 210 inside the electronic device.

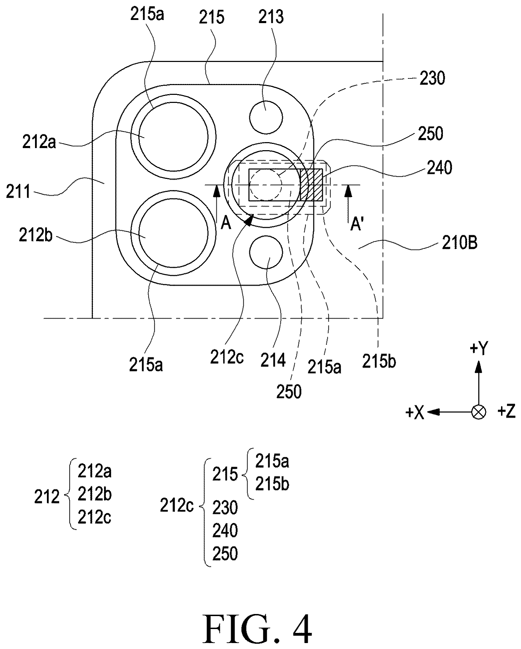

According to an embodiment, the second camera module 212 may be disposed inside the housing 210 such that a lens is exposed from the second surface 210B (or the rear surface) of the electronic device 101. For example, the camera module 212 may be electrically connected to a PCB. The flash 213 may include, for example, a light emitting diode (LED) or a xenon lamp. In an embodiment, two or more lenses (a wide-angle lens and a telephoto lens) and image sensors may be arranged on one surface of the electronic device 101. In an embodiment, the flash 213 and/or the sensor module 214 may emit IR light. For example, IR light emitted by the flash 213 and/or the sensor module 214 and reflected from an object may be received through the sensor module (e.g., the sensor module 214 of FIGS. 3 and 4) disposed on the second surface 210B of the housing 210. The electronic device 101 or the processor (e.g., the processor 180 of FIG. 1) may detect depth information of the object based on a time at which the IR light is received by the sensor module.

According to an embodiment, the key input devices 217 may be disposed on side surfaces 210C of the housing 210. In an embodiment, the electronic device 101 may not include some or any of the key input devices 217, and the key input devices 217 which are not included may be implemented in other forms such as soft keys on the display 201. In an embodiment, the key input devices may include a sensor module disposed on the second surface 210B of the housing 210.

According to an embodiment, the light emitting element 206 may be disposed, for example, on the first surface 210A of the housing 210. The light emitting element 206 may provide, for example, state information about the electronic device 200 in the form of light. In an embodiment, the light emitting element 206 may provide, for example, a light source interworking with an operation of the camera module 205. The light emitting element 206 may include, for example, an LED, an IR LED, and a xenon lamp.

According to an embodiment, the connector holes 208 and 209 may include a first connector hole 208 capable of accommodating a connector (e.g., a USB connector) for transmitting and receiving power and/or data to and from an external electronic device and/or a second connector hole (e.g., an earphone jack) 209 capable of accommodating a connector for transmitting and receiving an audio signal to and from an external electronic device.

FIG. 4 is a rear view illustrating a portion of the rear surface of an electronic device according to an embodiment of the disclosure. FIG. 4 may illustrate a portion of the second surface 210B (or rear surface) of the electronic device 101 on which the camera modules 212, 213, and 214 of FIG. 3 are disposed.

Referring to FIG. 4, according to an embodiment, the electronic device 101 may include the cover window 215 disposed on the second surface 210B. In an embodiment, the cover window 215 may be connected to or be a portion of the rear plate 211. According to an embodiment, the camera modules 212, 213, and 214 may receive light incident toward the second surface 210B or the cover window 215 of the electronic device 101. According to an embodiment, the cover window 215 may include a plurality of transparent regions 215a. The camera modules 212, 213, and 214 may receive light from the outside of the electronic device 101 or emit light to the outside through the transparent regions 215a of the cover window 215. According to an embodiment, the camera modules 212, 213, and 214 may include a (2-1)^{th} camera device 212a, a (2-2)^{th} camera device 212b, and a (2-3)^{th} camera device 212c, which are disposed inside the electronic device 101 and receive light through the transparent regions 215a. For example, the (2-1)^{th} camera device 212a and/or the (2-2)^{th} camera device 212b may be a wide-angle or ultra-wide-angle camera, and the third camera device 212c may be a telephoto camera. According to an embodiment, the camera modules 212, 213, and 214 may include the flash 213 and the sensor module 214 (e.g., a distance sensor). For example, the third camera device 212c may be disposed between the flash 213 and the sensor module 214.

According to an embodiment, the third camera device 212c (e.g., a telephoto camera or a folded camera) may include a lens group 230, an image sensor 240, a reflective member 250 disposed between the lens group 230 and the image sensor 240, and a case 215 accommodating the lens group 230, the image sensor 240, and the reflective member 250. The lens group 230 may include a plurality of lenses, and may receive light incident toward the rear surface 210B of the electronic device 101 through a transparent region 215a and transmit the light to the reflective member 250. The reflective member 250 may be configured to receive the light passing through the lens group 230 and refract and/or reflect it at least once thereinside. The image sensor 240 may be configured to receive and detect the light passing through the reflective member 250. For example, the case 215 may include a first case 215a for supporting the lens group 230 and the reflective member 250, and a second case 215b for supporting the reflective member 250 and the image sensor 240.

According to an embodiment, an edge or corner of the image sensor 240 may be disposed parallel to the longitudinal direction (e.g., Y-axis direction), width direction (e.g., X-axis direction), or thickness direction (e.g., Z-axis direction) of the electronic device 101. According to an embodiment, a short side (e.g., X-axis direction corner) of the image sensor 240 may be side by side with or parallel to a short side (e.g., X-axis direction corner) of the electronic device 101 or the display 201. A long side (e.g., Y-axis direction corner) of the image sensor 240 may be side by side with or parallel to a long side (e.g., Y-axis direction corner) of the electronic device 101 or the display 201.

According to an embodiment, an edge or corner of the reflective member 250 may be disposed parallel to the longitudinal direction (e.g., Y-axis direction), width direction (e.g., X-axis direction), or thickness direction (e.g., Z-axis direction) of the electronic device 101. According to an embodiment, a long side (e.g., X-axis direction corner) of the reflective member 250 may be side by side with or parallel to a short side (e.g., X-axis direction corner) of the electronic device 101 or the display 201. A short side (e.g., Y-axis direction corner) of the reflective member 250 may be side by side with or parallel to a long side (e.g., Y-axis direction corner) of the electronic device 101 or the display 201.

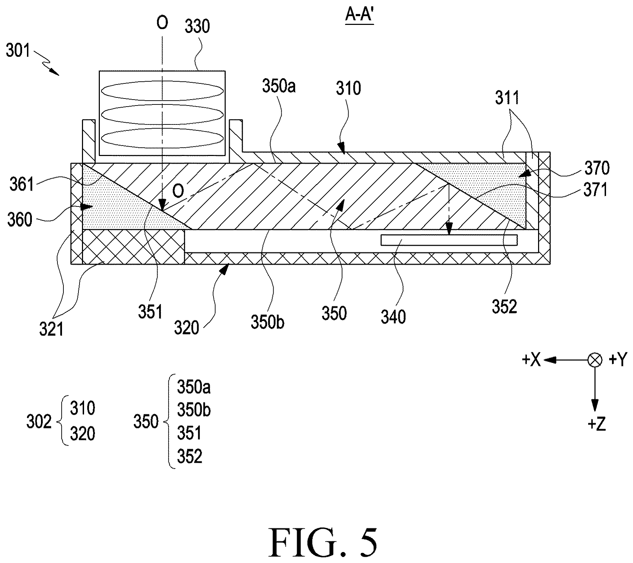

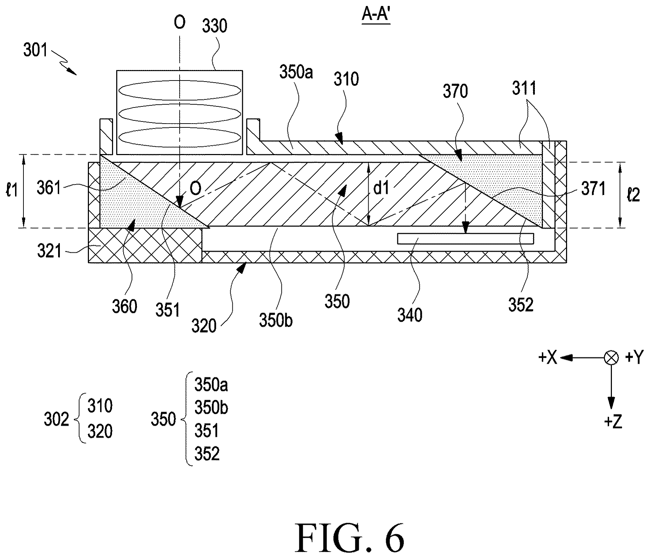

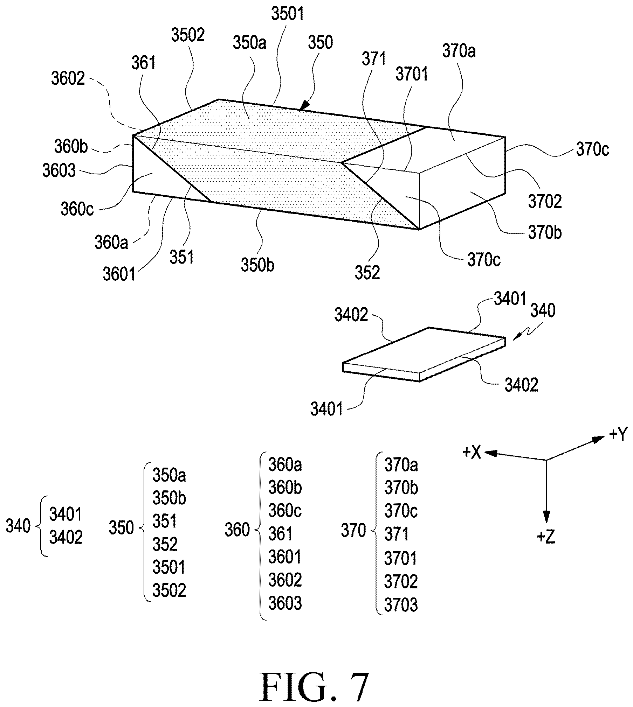

FIG. 5 is a side cross-sectional view illustrating an optical assembly according to an embodiment of the disclosure, taken along a line A-A' of FIG. 4. FIG. 6 is a side cross-sectional view illustrating the optical assembly according to an embodiment of the disclosure, taken along the line A-A' of FIG. 4. FIG. 7 is a perspective view illustrating an optical member and support members in the optical assembly according to an embodiment of the disclosure.

Referring to FIGS. 5 to 7, according to an embodiment, an optical assembly 301 (e.g., a telephoto camera or a folded camera) (e.g., the third camera device 212c) may include a case 302, a lens group 330 (or lens assembly or lens array) (e.g., the lens group 230 of FIG. 4) disposed in a portion of the case 302, an image sensor 340 (e.g., the image sensor 240 of FIG. 4) disposed inside the case 302, and an optical member 350 (e.g., a reflective and/or refractive member) for transmitting light that has passed through the lens group 330 to the image sensor 340. According to an embodiment, the optical assembly 301 may include the case 302 for supporting the lens group 330, the image sensor 340, and the optical member 350.

Referring to FIGS. 5 and 6, according to an embodiment, the case 302 may include a first case 310 and a second case 320. According to an embodiment, the first case 310 may be formed to support the lens group 330 and the optical member 350 in a form that at least partially surrounds them. According to an embodiment, the second case 320 may support the image sensor 340 and the optical member 350 in a form that at least partially surrounds them. According to an embodiment, the second case 320 may support at least a portion of a first support member 360 by surrounding the at least portion.

Referring to FIGS. 5 and 6, according to an embodiment, the lens group 330 may include a single lens or a plurality of lenses aligned along an optical axis O. The lens group 330 may focus or guide light incident from the outside of the electronic device 101 toward the optical member 350. In the disclosure, for example, the optical axis O may be side by side with or parallel to the thickness direction (e.g., Z-axis direction) of the electronic device 101.

According to an embodiment, the image sensor 340 may be configured to convert light emitted or reflected from an object and transmitted through the lens group 330 and the reflective member 350 into an electrical signal. According to an embodiment, the image sensor 340 may be configured to detect light that travels along a direction parallel to the optical axis O (e.g., the Z-axis direction) after being reflected and/or refracted at least once (four times in the embodiments of FIGS. 5 and 6) inside the optical member 350. The electronic device 101 may obtain an object image based on a signal and/or information detected through the image sensor 340. The image sensor 340 may include, for example, one selected from image sensors with different attributes, such as an RGB sensor, a black and white (BW) sensor, an IR sensor, or a UV sensor, a plurality of image sensors having the same attributes, or a plurality of image sensors having different attributes. Each image sensor included in the image sensor 340 may be implemented using, for example, a charged coupled device (CCD) sensor or a complementary metal oxide semiconductor (CMOS) sensor.

According to an embodiment, the image sensor 340 may include an imaging plane which receives at least a portion of light and on which an image is formed. In an embodiment, the imaging plane of the image sensor 340 may be disposed substantially parallel to an X-Y plane.

According to an embodiment, an electronic device (e.g., the electronic device 101 of FIGS. 1 to 3) or the electronic device 101 may be configured to move the image sensor 340 in a direction (e.g., the direction of the optical axis O or the Z-axis direction) parallel to the direction of light incidence onto the imaging plane of the image sensor 340 and/or a direction (e.g., the X-axis direction and/or the Y-axis direction) intersecting the direction of light incidence. According to an embodiment, the processor (e.g., the processor 120 of FIG. 1) of the electronic device 101 may be configured to perform an anti-shake operation by moving the image sensor 340 in the plane (e.g., the X-Y plane) perpendicular to the direction (e.g., the Z-axis direction) of light incidence onto the imaging plane of the image sensor 340. According to an embodiment, the processor 120 may be configured to perform a focus adjustment operation by moving the image sensor back and forth along the direction (e.g., the Z-axis direction) of light incidence onto the imaging plane of the image sensor 340. For example, an actuator for moving the image sensor 340 may be electrically connected to the processor 120 and provided inside or outside the first case 310 and/or the second case 320.

Referring to FIGS. 5 and 6, according to an embodiment, the optical member 350 (e.g., a reflective and/or refractive member) may include a first surface 350a, a second surface 350b opposite to the first surface 350a, and sidewalls 351 and 352 (or side surfaces) connecting the first surface 350a and the second surface 350b. For example, the sidewalls 351 and 352 may be formed to be inclined with respect to the first surface 350a or the second surface 350b. According to an embodiment, the first surface 350a of the optical member 350 faces a direction (e.g., the rear or - Z direction) in which the lens group 330 is disposed, and the second surface 350b may face a direction opposite to the first surface 350a. According to an embodiment, a portion of the second surface 350b may face the image sensor 340.

For example, the reflective member 250 may be configured to receive light that has passed through the lens group 230 and refract and/or reflect it at least once thereinside.

According to an embodiment, the sidewalls 351 and 352 (or side surfaces) of the optical member 350 may include a first sidewall 351 inclined with respect to the optical axis O of the lens group 330 and a second sidewall 352 opposite to or disposed on an opposite side of the first sidewall 351 and inclined with respect to the optical axis O. For example, the first sidewall 351 may include a reflective surface (or refractive surface) that reflects and/or refracts incident light toward the second sidewall 352. For example, an inner surface of the second sidewall 352 may include a reflective surface (or refractive surface) that reflects and/or refracts the incident light toward the image sensor 340. According to an embodiment, the first sidewall 351 may at least partially contact the first support member 360 disposed on the outside. According to an embodiment, the second sidewall 352 may at least partially contact the second support member 370 disposed on the outside. For example, the sidewalls 351 and 352 and their reflective surfaces may be formed to be inclined with respect to the first surface 350a or the second surface 350b, and may form an angle of, for example, about 45 degrees or an angle greater than 0 and smaller than about 45 degrees with respect to the first surface 350a or the second surface 350b. According to an embodiment, the reflective member 350 may be configured to reflect the light incident from the lens group 330 at least once (four times in the embodiment of FIGS. 5 and 6). In the disclosure, the number of reflections of light within the reflective member 350 and the path of light are only an example and may be changed.

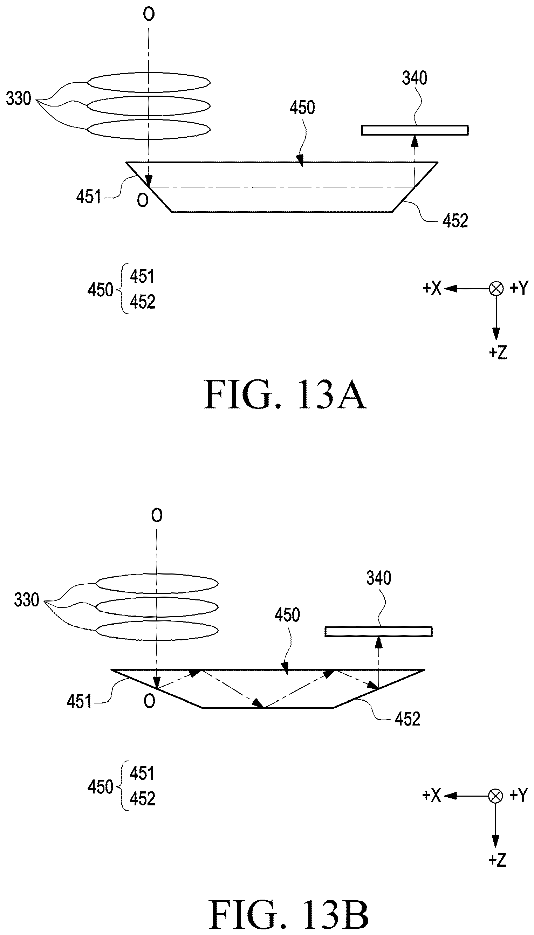

According to an embodiment, the optical member 350 may have a side cross-section parallel to the Y-Z plane in the shape of a parallelogram, in which case the first sidewall 351 and the second sidewall 352 may be side by side with or parallel to each other. When the first sidewall 351 and the second sidewall 352 are side by side with or parallel to each other, the lens group 330 and the image sensor 340 may be disposed on different sides (e.g., opposite sides) of the optical member 350. However, the shape of the optical member 350 and the positions of the lens group 330 and the image sensor 340 relative to the optical member 350 may be changed. According to an embodiment (e.g., referring to FIG. 13), the optical member 350 may have a side cross-section along the Y-Z plane in the shape of a trapezoid, in which case the first sidewall 351 and the second sidewall 352 may form a non-zero angle with respect to each other, and the lens group 330 and the image sensor 340 may be disposed on the same side (e.g., a -Z direction side) of the optical member 350. However, the shape of the optical member 350 is not limited and may be, for example, a rectangular prism, a polygonal prism, or a cylinder extended in a direction intersecting or perpendicular to the optical axis O, and various other shapes are also available.

Referring to FIGS. 5 to 7, according to an embodiment, the first support member 360 may be configured to support the first sidewall 351 of the optical member 350, and the second support member 370 may be configured to support the second sidewall 352 of the optical member 350. According to an embodiment, the first support member 360 and the second support member 370 may maintain the optical member 350 in its original position or assembly position within the case 302. For example, the first support member 360 and the second support member 370 may prevent the reflective member 350 from being displaced or deviating from its original position or assembly position due to external shock, such as the dropping of the electronic device 101.

According to an embodiment, for example, the first support member 360 and the second support member 370 may each at least partially contact the first sidewall 351 and the second sidewall 352. According to an embodiment, the first support member 360 may include a (1-1)^{th} surface 360a, a (1-2)^{th} surface 360b, (1-3)^{th} surfaces 360c, and a first inclined surface 361. According to an embodiment, a direction that the (1-1)^{th} surface 360a faces may be side by side with or parallel to the direction (e.g., the -Z direction) that the first surface 350a of the optical member 350 faces. For example, the (1-2)^{th} surface 360b may be connected to the (1-1)^{th} surface 360a, and a direction (e.g., the -X direction) that the (1-2)^{th} surface 360b faces may intersect or be perpendicular to the direction that the (1-1)^{th} surface 360a faces. For example, the (1-3)^{th} surfaces 360c may be connected to the (1-1)^{th} surface 360a and the (1-2)^{th} surface 360b, and a direction (e.g., the +Y direction or the -Y direction) that the (1-3)^{th} surfaces 360c face may intersect or be perpendicular to the directions that the (1-1)^{th} surface 360a and the (1-2)^{th} surface 360b face. The first inclined surface 361 may be connected to the (1-1)^{th} surface 360a, the (1-2)^{th} surface 360b, and the (1-3)^{th} surfaces 360c. The first inclined surface 361 may be inclined with respect to the optical axis O and may be side by side with or parallel to the first sidewall 351 of the optical member 350. The first inclined surface 361 may support the first sidewall 351 of the optical member 350, and may, for example, at least partially contact the first sidewall 351.

According to an embodiment, the second support member 370 may include a (2-1)^{th} surface 370a, a (2-2)^{th} surface 370b, (2-3)^{th} surfaces 370c, and a first inclined surface 371. According to an embodiment, a direction that the (2-1)^{th} surface 370a faces may be side by side with or parallel to the direction (e.g., the +Z direction) that the second surface 350b of the optical member 350 faces. For example, the (2-2)^{th} surface 370b may be connected to the (2-1)^{th} surface 370a, and a direction (e.g., the +X direction) that the (2-2)^{th} surface 370b faces may intersect or be perpendicular to the direction that the (2-1)^{th} surface 370a faces. For example, the (2-3)^{th} surfaces 370c may be connected to the (2-1)^{th} surface 370a and the (2-2)^{th} surface 370b, and a direction (e.g., the +Y direction or the -Y direction) that the (2-3)^{th} surfaces 370c face may intersect or be perpendicular to the directions that the (2-1)^{th} surface 370a and the (2-2)^{th} surface 370b face. The first inclined surface 371 may be connected to the (2-1)^{th} surface 370a, the (2-2)^{th} surface 370b, and the (2-3)^{th} surfaces 370c. The first inclined surface 371 may be inclined with respect to the optical axis O and may be side by side with or parallel to the second sidewall 352 of the optical member 350. The first inclined surface 371 may support the second sidewall 352 of the optical member 350, and may, for example, at least partially contact the second sidewall 352.

According to an embodiment, the height of the first support member 360 and/or the height (e.g., Z-axis direction height) of the second support member 370 may be greater than or equal to the height (e.g., Z-axis direction height) of the optical member 250. Referring to FIG. 6, according to an embodiment, a height 11 of the first support member 360 and/or a height l2 (e.g., Z-axis direction height) of the second support member 370 may be greater than a height d1 (e.g., Z-axis direction height) of the optical member 350, in which case the optical member 350 may be supported more stably than when the heights of the support members 360 and 370 are less than or equal to the height of the optical member 350. According to an embodiment, the first support member 360 and the second support member 370 may be supported by assembly reference portions 311 and 321 of the case 302, which will be described later, thereby maintaining the arrangement or alignment of the lens group 330, the optical member 350, and the image sensor 340.

According to an embodiment, the case 302 may include a first assembly reference portion 311 surrounding at least a portion of the first support member 360 and a second assembly reference portion 321 surrounding at least a portion of the second support member 370. According to an embodiment, the first assembly reference portion 311 may be included in the first case 310. For example, the first assembly reference portion 311 may correspond to, but is not limited to, a portion of the first case 310, as illustrated in FIGS. 5 and 6. For example, the first assembly reference portion 311 may be connected to the first case 310, as a separate member. According to an embodiment, the second assembly reference portion 321 may be included in the second case 320. For example, the second assembly reference portion 321 may correspond to, but is not limited to, a portion of the second case 320 as illustrated in FIGS. 5 and 6. For example, the second assembly reference portion 321 may be connected to the second case 320, as a separate member.

According to an embodiment, the first assembly reference portion 311 and the second assembly reference portion 321 may provide a reference for the original positions or assembly positions of the first support member 360 and the second support member 370, thereby assisting in vertical and horizontal alignment of the first support member 360 and the second support member 370. In the disclosure, when it is said that "the first support member 360 and/or the second support member 370 is vertically and horizontally aligned," this may mean that corners of the first support member 360 and the second support member 370 that do not contact the optical member 350 are disposed or aligned parallel or perpendicular to the vertical direction (e.g., the thickness direction of the electronic device 101 or the Z-axis direction) or the horizontal direction (e.g., the longitudinal direction (e.g., Y-axis direction) and/or the width direction (e.g., X-axis direction) of the electronic device 101). According to an embodiment, when the first support member 360 and the second support member 370 are vertically and horizontally aligned, the optical member 350 may be disposed in a pre-designed assembly position.

According to an embodiment, the first assembly reference portion 311 may contact the first support member 360 on two or more surfaces. For example, the number of contacting surfaces between the first assembly reference portion 311 and the first support member 360 may be three or more (e.g., four). According to an embodiment, the first assembly reference portion 311 may support and/or contact the (1-1)^{th} surface 360a, the (1-2)^{th} surface 360b, and/or the (1-3)^{th} surfaces 360c of the first support member 360 illustrated in FIG. 7. For example, the first assembly reference portion 311 and the first support member 360 may be supported by each other through friction without a separate coupling member (e.g., adhesive) interposed therebetween, and according to an embodiment, a separate coupling member (e.g., adhesive) may be disposed.

According to an embodiment, the second assembly reference portion 321 may contact the second support member 370 on two or more surfaces. For example, the number of contacting surfaces between the second assembly reference portion 321 and the first support member 370 may be three or more (e.g., four). According to an embodiment, the second assembly reference portion 321 may support and/or contact the (2-1)^{th} surface 370a, the (2-2)^{th} surface 370b, and the (2-3)^{th} surfaces 370c of the second support member 370 illustrated in FIG. 7. For example, the second assembly reference portion 321 and the second support member 370 may be supported by each other through friction without a separate coupling member (e.g., adhesive) interposed therebetween, and according to an embodiment, a separate coupling member (e.g., adhesive) may be disposed.

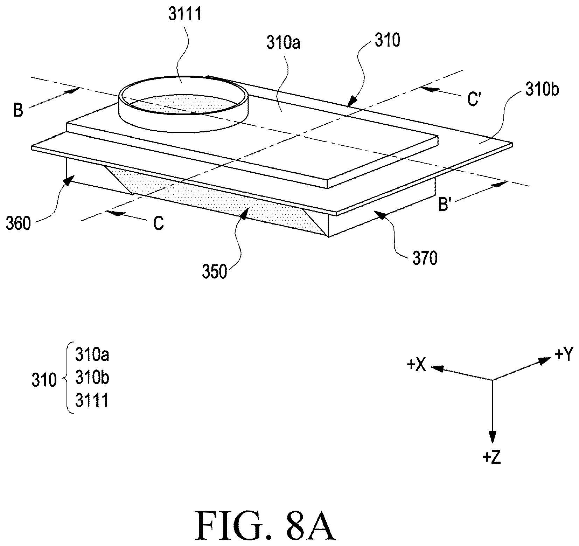

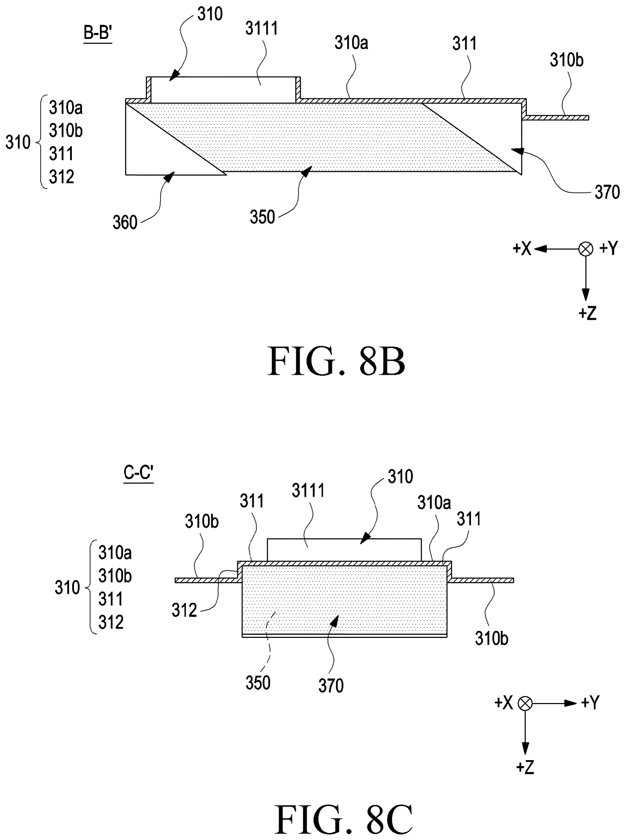

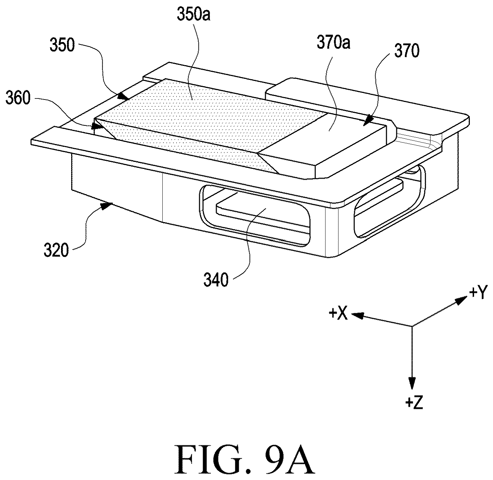

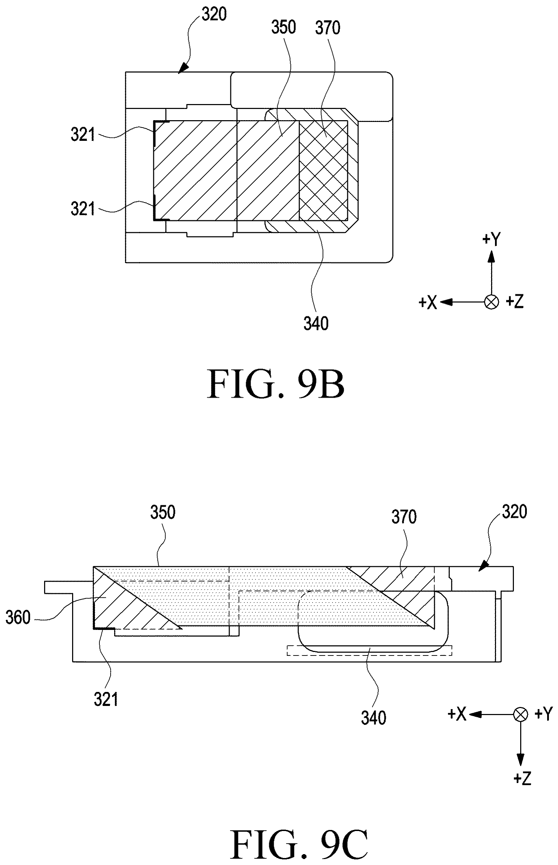

FIG. 8A is a schematic perspective view illustrating a first case, an optical member, and support members in an optical assembly according to an embodiment of the disclosure. FIG. 8B is a side cross-sectional view taken along a line B-B' of FIG. 8A, according to an embodiment of the disclosure. FIG. 8C is a side cross-sectional view taken along a line C-C' of FIG. 8A, according to an embodiment of the disclosure. FIG. 9A is a perspective view illustrating an optical assembly according to an embodiment of the disclosure. FIG. 9B is a plan view illustrating an optical assembly according to an embodiment of the disclosure. FIG. 9C is a side cross-sectional view illustrating an optical assembly according to an embodiment of the disclosure.

All or some of the components of the optical assembly 301 according to the embodiments of FIGS. 8A to 9C may be the same as or similar to the components of the optical assembly 301 according to the embodiments of FIGS. 5 to 7. For the first case 310 and the second case 320 of the case 302, the lens group 330, the optical member 350, and the image sensor 340 according to the embodiments of FIGS. 8A to 9C, the first case 310 and the second case 320 of the case 302, the lens group 330, the optical member 350, and the image sensor 340 according to the embodiments of FIGS. 5 to 7 may be referred to.

Referring to FIGS. 8A to 8C, according to an embodiment, the first case 310 of the case 302 may support the lens group 330 and the optical member 350 in a form that at least partially surrounds them. According to an embodiment, the second case 320 may support the image sensor 340 and the optical member 350 in a form that at least partially surrounds them. According to an embodiment, the first case 310 may include a first portion 310a surrounding the first surface 350 of the optical member 350 and a second portion 310b extending outward from the first portion 310a. The first portion 310a of the first case 310 may include a lens support portion 3111 that supports the lens group 330 in a lateral direction (e.g., the X-axis and/or Y-axis direction). According to the embodiment of FIGS. 8B and 8C, a step may exist between the first portion 310a and the second portion 310b. For example, the second portion 310b may include a step structure 312 surrounding at least a portion of the second support member 370. However, the shape of the first case 310 is only an example and is not limited thereto, and for example, the first case 310 may be configured to surround at least a portion of the first support member 360.

Referring to FIGS. 9A to 9C, according to an embodiment, the second case 320 of the case 302 may support at least a portion of the first support member 360 by surrounding the at least portion. A portion of the second case 320 may be disposed outside of the second support member 370, spaced apart from the second support member 370. According to an embodiment, the second case 320 may include a region that engages with the first case 310, and protect and support the other components (e.g., the lens group 330, the optical member 350, and the support members 360 and 370) of the optical assembly 301 and maintain the alignment of the components by being assembled with the first case 310 and forming the case 310. However, the shape of the second case 320 is only an example and is not limited thereto, and for example, the second case 320 may be configured to surround at least a portion of the second support member 370.

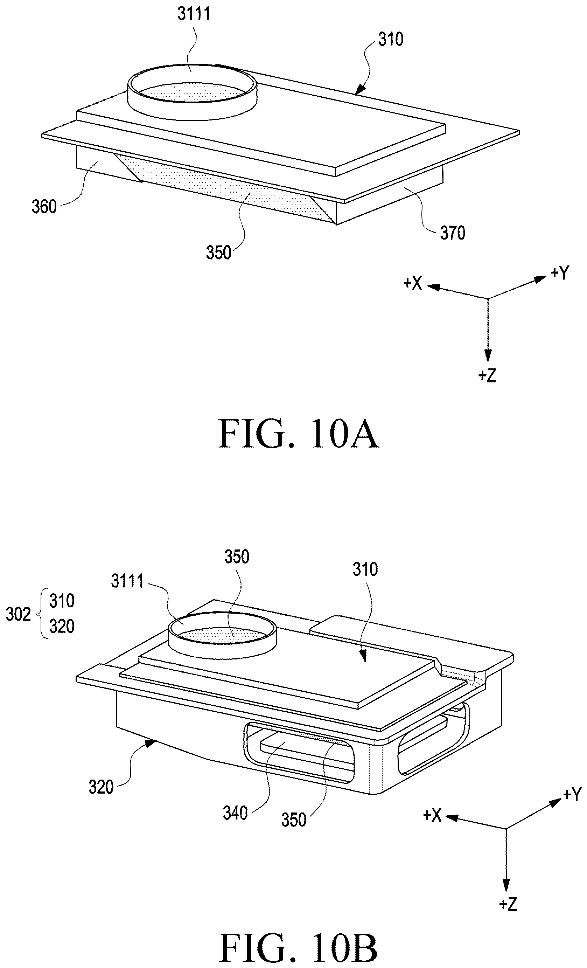

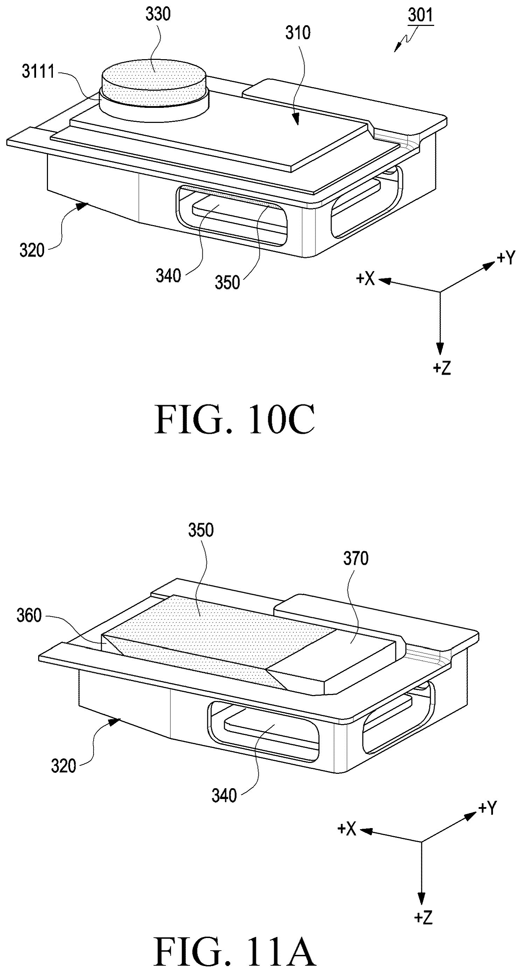

FIGS. 10A to 10C are diagrams illustrating an assembly structure of an optical assembly according to an embodiment. FIGS. 11A to 11C are diagrams illustrating an assembly structure of an optical assembly according to an embodiment.

For the optical assembly 301 according to the embodiments of FIGS. 10A to 11C, the optical assembly 301 according to the embodiments of FIGS. 5 to 9C may be referred to.

Referring to FIGS. 10A and 10B, the second case 320 may be coupled or assembled in a state where the first case 310, the optical member 350, the first support member 360, and the second support member 370 of the optical assembly 301 are coupled or assembled. For example, a step structure (e.g., the step structure 312 of FIGS. 8B and 8C) of the first case 310 may guide assembly positions of the optical member 350, the first support member 360, and the second support member 370 relative to the first case 310. For example, the step structure (e.g., the step structure 312 of FIGS. 8B and 8C) of the first case 310 may reinforce a coupling force among the optical member 350, the first support member 360, and the second support member 370. Referring to FIG. 10C, the lens group 330 may be coupled or assembled to the lens support portion 3111 of the first case 310 in a state where the first case 310, the second case 320, the optical member 350, the first support member 360, and the second support member 370 are coupled or assembled.

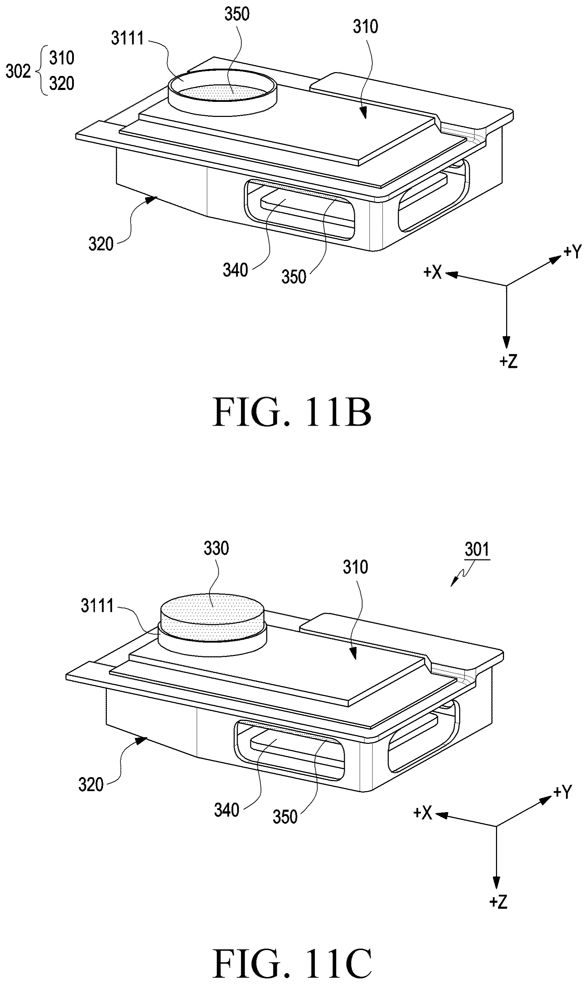

Referring to FIGS. 11A and 11B, the first case 310 may be coupled or assembled in a state where the second case 320, the optical member 350, the first support member 360, and the second support member 370 of the optical assembly 301 are coupled or assembled. For example, an inner hole of the second case 320 may be configured to guide assembly positions of the optical member 350, the first support member 360, and the second support member 370 relative to the first case 310. Referring to FIG. 11C, the lens group 330 may be coupled or assembled to the lens support portion 3111 of the first case 310 in a state where the first case 310, the second case 320, the optical member 350, the first support member 360, and the second support member 370 are coupled or assembled.

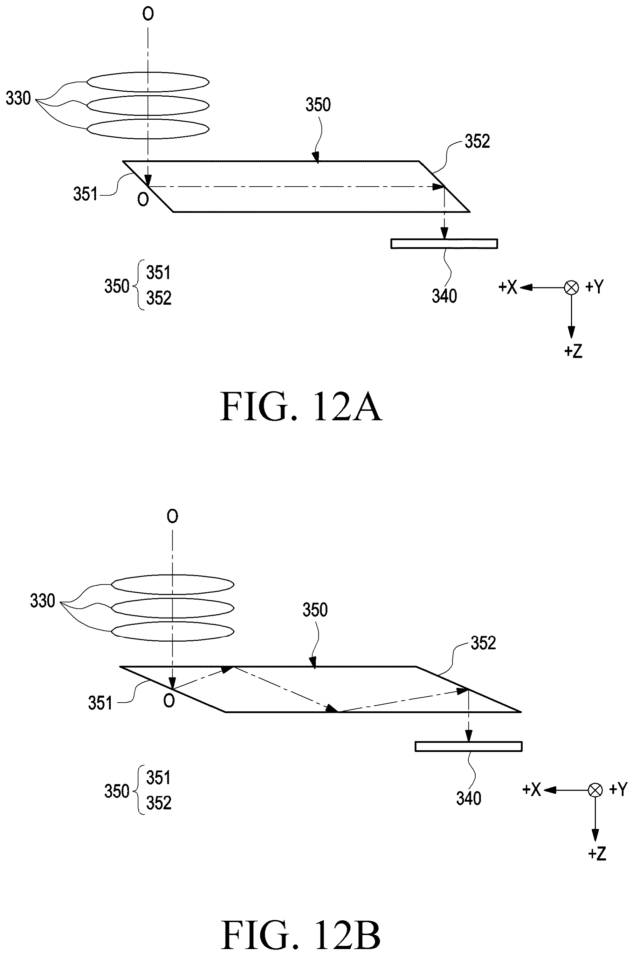

FIG. 12A is a schematic layout view illustrating some components of an optical assembly according to an embodiment. FIG. 12b is a schematic layout view illustrating some components of an optical assembly according to an embodiment. FIG. 13A is a schematic layout view illustrating some components of an optical assembly according to an embodiment. FIG. 13B is a schematic layout view illustrating some components of an optical assembly according to an embodiment.

The lens group 330, the optical member 350 or 450, and the image sensor 340 of FIGS. 12A to 13B may be included in the optical assembly 301 of the embodiments of FIGS. 5 to 11C. For the lens group 330, the optical member 350, and the image sensor 340 in the embodiment of FIGS. 12A and 12B, the lens group 330, the optical member 350, and the image sensor 340 of FIGS. 5 to 11C may be referred to. For the lens group 330 and the image sensor 340 in the embodiment of FIGS. 13A and 13B, the lens group 330 and the image sensor 340 of FIGS. 5 to 11C may be referred to. The optical member 450 of FIGS. 13A and 13B may have the same or similar characteristics as the optical member 350 of FIGS. 5 to 12B, excluding its shape.

Referring to FIGS. 12A and 12B, according to an embodiment, the optical member 350 may have a side cross-section parallel to the Y-Z plane in the shape of a parallelogram, in which case the first sidewall 351 and the second sidewall 352 of the optical member 350 may be side by side with or parallel to each other. When the first sidewall 351 and the second sidewall 352 are side by side with or parallel to each other, the lens group 330 and the image sensor 340 may be disposed on different sides (e.g., opposite sides) of the optical member 350.

According to an embodiment, the reflective member 350 may be configured to reflect light incident from the lens group 330 at least once. For example, as an angle (acute angle) that the sidewalls 351 and 352 form with the plane (e.g., the X-Y plane) perpendicular to the optical axis O decreases, a reflection angle of light on the inner reflective surfaces of the sidewalls 351 and 352 may decrease, and the number of reflections of light inside the reflective member 350 may increase. Herein, the reflection angle may refer to an angle formed by a direction in which light is reflected from the reflective surfaces of the sidewalls 351 and 352 and a normal line perpendicular to the inner reflective surfaces of the sidewalls 351 and 352. The angle (e.g., 45 degrees) that the first sidewall 351 and the second sidewall 352 of the embodiment in FIG. 12A form with the plane (e.g., the X-Y plane) perpendicular to the optical axis O may be greater than the angle (e.g., about 20 degrees to about 35 degrees) that the first sidewall 351 and the second sidewall 352 of the embodiment in FIG. 12B form with the plane (e.g., the X-Y plane) perpendicular to the optical axis O. Accordingly, the number (e.g., 2) of times light is reflected inside the reflective member 350 in the embodiment of FIG. 12A may be less than the number (e.g., 4) of times light is reflected inside the reflective member 350 in the embodiment of FIG. 12B. In the disclosure, the inclinations of the sidewalls 351 and 352 of the reflective member 350, the number of reflections of light inside the reflective member 350, and the path of light propagation are merely an example and may be modified.

Referring to FIGS. 13A and 13B, according to an embodiment, the optical member 350 may have a side cross-section parallel to the Y-Z plane in the shape of a trapezoid, in which case the first sidewall 351 and the second sidewall 352 may form a non-zero angle with respect to each other, and the lens group 330 and the image sensor 340 may be disposed on the same side (e.g., a -Z direction side) of the optical member 350. In the disclosure, the shape of the optical member 350 is not limited, and may be, for example, a rectangular prism, a polygonal prism, or a cylinder extended in a direction intersecting or perpendicular to the optical axis O, and various other shapes are also available.

According to an embodiment, the reflective member 450 may be configured to reflect light incident from a lens group 430 at least once. For example, as an angle (acute angle) that sidewalls 451 and 452 form with the plane (e.g., the X-Y plane) perpendicular to the optical axis O decreases, a reflection angle of light on inner reflective surfaces of the sidewalls 451 and 452 may decrease, and the number of reflections of light inside the reflective member 450 may increase. Herein, the reflection angle may refer to an angle formed by a direction in which light is reflected from the reflective surfaces of the sidewalls 451 and 452 and a normal line perpendicular to the inner reflective surfaces of the sidewalls 451 and 452. An angle (e.g., 45 degrees) that a first sidewall 451 and a second sidewall 452 of the embodiment in FIG. 13A form with the plane (e.g., the X-Y plane) perpendicular to the optical axis O may be greater than an angle (e.g., about 20 degrees to about 35 degrees) that the first sidewall 451 and the second sidewall 452 of the embodiment in FIG. 13B form with the plane (e.g., the X-Y plane) perpendicular to the optical axis O. Accordingly, the number (e.g., 2) of times light is reflected inside the reflective member 450 in the embodiment of FIG. 13A may be less than the number (e.g., 4) of times light is reflected inside the reflective member 450 in the embodiment of FIG. 13B. In the disclosure, the inclinations of the sidewalls 451 and 452 of the reflective member 450, the number of reflections of light inside the reflective member 450, and the path of light propagation are merely an example and may be modified.

The problems to be solved by the disclosure are not limited to the above-mentioned problems, and may be diversely extended without departing from the spirit and scope of the disclosure. The effects that may be obtained from the disclosure are not limited to the effects mentioned above, and various effects that are directly or indirectly grasped through this document may be provided.

According to an embodiment of the disclosure, the electronic device 101 may be provided. The electronic device may include the case 302, the lens group 320 disposed in a portion of the case and including at least one lens aligned along the optical axis O, the image sensor 340 disposed inside the case and configured to detect light passing through the lens group, and the reflective member 350 or 450 disposed between the lens group and the image sensor inside the case and configured to change a path of the light passing through the lens group toward the image sensor. The reflective member may include the first sidewall 351 or 451 inclined with respect to the optical axis of the lens group and the second sidewall 351 or 451 disposed opposite to the first sidewall of the reflective member. The electronic device may include the first support member 360 configured to contact a portion of the case and support the first sidewall, and the second support member 370 configured to contact a portion of the case and support the second sidewall.

According to an embodiment, the case may include the first assembly reference portion 311 surrounding at least a portion of the first support member.

According to an embodiment, an inner surface of the first assembly reference portion contacts two or more surfaces of the first support member.

According to an embodiment, the case may further include the first case 310 supporting the lens group.

The first assembly reference portion may be connected to the first case or form a portion of the first case.

According to an embodiment, the case may include the second assembly reference portion 321 surrounding at least a portion of the second support member.

According to an embodiment, surfaces of the second assembly reference portion may contact two or more surfaces of the second support member.

According to an embodiment, the case may further include the second case 320.

The second case may be configured to move the image sensor in a direction parallel to the optical axis or in a direction intersecting the optical axis.

According to an embodiment, the second assembly reference portion may be connected to the second case or form a portion of the second case.

According to an embodiment, the second sidewall may be parallel to the first sidewall or inclined with respect to the first sidewall.

According to an embodiment, the first support member may include the first inclined surface 361 contacting an outer surface of the first sidewall and inclined with respect to the optical axis.

According to an embodiment, the second support member may include the second inclined surface 371 contacting an outer surface of the second sidewall and inclined with respect to the optical axis.

According to an embodiment, the first sidewall of the optical member may include the first reflective surface 351 configured to reflect the light passing through the lens group toward an inside of the optical member.

According to an embodiment, the second sidewall of the optical member may include the second reflective surface 352 configured to reflect the light passing through the inside of the optical member toward the image sensor.

According to an embodiment, the image sensor may be closer to the second sidewall than to the first sidewall.

According to an embodiment, the image sensor may be disposed to face at least a portion of the lens group with the optical member interposed between the image sensor and the lens group.

According to an embodiment of the disclosure, the optical assembly 301 may be provided. The optical assembly may include the case 302, the lens group 330 disposed in a portion of the case and including at least one lens aligned along the optical axis O, the image sensor 340 disposed inside the case and configured to detect light passing through the lens group, the reflective member 350 or 450 disposed between the lens group and the image sensor inside the case and configured to change a path of the light passing through the lens group toward the image sensor, and the first support member 360 and the second support member 370 disposed on both opposite sides of the optical member. The case may include the first assembly reference portion 311 surrounding at least a portion of the first support member, and the second assembly reference portion 321 surrounding at least a portion of the second support member.

According to an embodiment, the optical member may include the first sidewall 351 or 451 inclined with respect to the optical axis O and the second sidewall 351 or 451 disposed opposite to the first sidewall of the optical member. The first support member 360 may support the first sidewall, and the second support member 370 may support the second sidewall.

According to an embodiment, surfaces of the first assembly reference portion may contact two or more surfaces of the first support member. An inner surface of the second assembly reference portion may contact two or more surfaces of the second support member.

According to an embodiment, the case may further include the first case 310 supporting the lens group. The first assembly reference portion may be connected to the first case or form a portion of the first case.

According to an embodiment, the case may further include the second case 320 configured to move the image sensor in a direction parallel to the optical axis of the lens group or in a direction intersecting the optical axis. The second assembly reference portion may be connected to the second case or form a portion of the second case.

The optical assembly and the electronic device including the same according to the disclosure described above are not limited by the foregoing embodiments and drawings, and it will be obvious to those skilled in the art that various substitutions, modifications, and changes may be made within the technical scope of the disclosure.

Although the disclosure has been illustrated and described with reference to an embodiment, it should be understood that the embodiment is for illustration and does not limit the disclosure. It will be apparent to those skilled in the art that various changes in form and detailed configuration may be made without departing from the overall scope of the disclosure, including the appended claims and their equivalents.

The electronic device according to an embodiment of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B", "at least one of A and B", "at least one of A or B", "A, B, or C", "at least one of A, B, and C", and "at least one of A, B, or C", may include any one of, or all possible combinations of the items enumerated together in a corresponding one of the phrases. As used herein, such terms as "1st" and "2nd", or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with", "coupled to", "connected with", or "connected to" another element (e.g., a second element), it may be understood that the element may be coupled with the other element directly (e.g., wiredly), wirelessly, or via a third element.

As used in connection with an embodiment of the disclosure, the term "module" may include a unit implemented in hardware, software, or firmware, and may interchangeably be used with other terms, for example, logic, logic block, part, or circuitry. A module may be a single integral component, or a minimum unit or part thereof, adapted to perform one or more functions. For example, according to an embodiment, the module may be implemented in a form of an application-specific integrated circuit (ASIC).

An embodiment as set forth herein may be implemented as software (e.g., the program 140) including one or more instructions that are stored in a storage medium (e.g., the internal memory 136 or the external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to an embodiment of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to an embodiment, each component (e.g., a module or a program) of the above-described components may include a single entity or multiple entities, and some of the multiple entities may be separately disposed in different components. According to an embodiment, one or more of the above-described components may be omitted, or one or more other components may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to an embodiment, operations performed by the module, the program, or another component may be carried out sequentially, in parallel, repeatedly, or heuristically, or one or more of the operations may be executed in a different order or omitted, or one or more other operations may be added.

## Claims

1. An electronic device (101) comprising:
a case (302);
a lens group (330) disposed in a portion of the case and including at least one lens aligned along an optical axis (O);
an image sensor (340) disposed inside the case and configured to detect light passing through the lens group;
an optical member (350; 450) disposed between the lens group and the image sensor inside the case and configured to change a path of the light passing through the lens group toward the image sensor, wherein the optical member includes a first sidewall (351; 451) inclined with respect to the optical axis (O) and a second sidewall (351; 451) disposed opposite to the first sidewall of the optical member;
a first support member (360) configured to contact a portion of the case and support the first sidewall; and
a second support member (370) configured to contact a portion of the case and support the second sidewall.

2. The electronic device of claim 1, wherein the case includes a first assembly reference portion (311) surrounding at least a portion of the first support member.

3. The electronic device of claim 2, wherein surfaces of the first assembly reference portion contact two or more surfaces of the first support member.

4. The electronic device of claim 2 or 3, wherein the case further includes a first case (310) supporting the lens group, and the first assembly reference portion is connected to the first case or forms a portion of the first case.

5. The electronic device of any one of claims 1 to 4, wherein the case includes a second assembly reference portion (321) surrounding at least a portion of the second support member.

6. The electronic device of claim 5, wherein surfaces of the second assembly reference portion contact two or more surfaces of the second support member.

7. The electronic device of claim 5 or 6, wherein the case further includes a second case (320), and the second case is configured to move the image sensor in a direction parallel to the optical axis or in a direction intersecting the optical axis.

8. The electronic device of claim 7, wherein the second assembly reference portion is connected to the second case or forms a portion of the second case.

9. The electronic device of any one of claims 1 to 8, wherein the second sidewall is parallel to the first sidewall or is inclined with respect to the first sidewall.

10. The electronic device of any one of claims 1 to 9, wherein the first support member includes a first inclined surface (361) contacting an outer surface of the first sidewall and inclined with respect to the optical axis.

11. The electronic device of any one of claims 1 to 10, wherein the second support member includes a second inclined surface (371) contacting an outer surface of the second sidewall and inclined with respect to the optical axis.

12. The electronic device of any one of claims 1 to 11, wherein the first sidewall of the optical member includes a first reflective surface (351) configured to reflect the light passing through the lens group toward an inside of the optical member, and
wherein the second sidewall of the optical member includes a second reflective surface (352) configured to reflect the light passing through the inside of the optical member toward the image sensor.

13. The electronic device of any one of claims 1 to 12, wherein the image sensor is closer to the second sidewall than to the first sidewall.

14. The electronic device of any one of claims 1 to 12, wherein the image sensor is arranged to face at least a portion of the lens group with the optical member being interposed between the image sensor and the lens group.

15. An optical assembly (301) comprising:
a case (302);
a lens group (330) disposed in a portion of the case and including at least one lens aligned along an optical axis (O);
an image sensor (340) disposed inside the case and configured to detect light passing through the lens group;
an optical member (350; 450) disposed between the lens group and the image sensor inside the case and configured to change a path of the light passing through the lens group toward the image sensor; and
a first support member (360) and a second support member (370) disposed on both opposite sides of the optical member,
wherein the case includes a first assembly reference portion (311) surrounding at least a portion of the first support member and a second assembly reference portion (321) surrounding at least a portion of the second support member.
